# FASCICULE DE BREVET EUROPEEN

(11) **EP 1 310 652 B1**
(45) Date de publication et mention de la délivrance du brevet: **27.12.2006**
(21) Numéro de dépôt: 02292773.5
(22) Date de dépôt: 06.11.2002
(51) Int. Cl.: F02D 33/02, F02B 37/24, F02D 23/00, F02D 41/10

(54) **Dispositif et procédé de réglage de turbocompresseur d'un moteur suralimenté**
Vorrichtung und Verfahren zur Regelung eines Turboladers einer Brennkraftmaschine
Device and method for controlling the turbocharger of an internal combustion engine

(30) Priorité: 07.11.2001 FR 0114390
(43) Date de publication de la demande: 14.05.2003
(73) Titulaire: Renault s.a.s., 92100 Boulogne Billancourt (FR)
(72) Inventeur: Fontvieille, Laurent, 91190 Gif-Sur-Yvette (FR); Nijenhuis, Wouter, 91360 Epinay sur Orge (FR)

(56) Documents cités:
- WO-A-97/45633
- DE-A- 19 935 901
- US-A- 5 442 918
- US-A- 6 161 383

## Description

Il sera ici exposé un dispositif ainsi qu'un procédé de réglage d'un turbocompresseur de moteur suralimenté.

Les moteurs suralimentés utilisés notamment dans certains modèles d'automobiles comprennent un réglage du turbocompresseur pour s'adapter aux différents régimes rencontrés : c'est ainsi qu'aux faibles régimes, le débit de gaz d'échappement qui traverse la turbine fournit trop peu d'énergie pour entraîner le turbocompresseur et porter l'air traversant le compresseur à la pression souhaitée, si aucun réglage n'est fait. Un dispositif classique de réglage continu du turbocompresseur comprend des ailettes pivotantes situées à la section d'entrée de la turbine de façon à modifier la section d'ouverture offerte aux gaz d'échappement vers la turbine, le rapport de détente des gaz à travers la turbine et finalement l'énergie gagnée pour comprimer l'air aspiré. Le rapport de détente, corrélé à un état de plus ou moins grande ouverture des ailettes, doit pouvoir être modifié à chaque instant d'après les conditions de fonctionnement et de commande du moteur. Une tige de commande assure le pivotement des ailettes ; elle est commandée principalement à partir d'un signal mesurant la pression dans le collecteur d'admission de l'air dans le moteur, entre le compresseur et la culasse du moteur, appliqué à une unité de calcul qui délivre un signal de commande à un dispositif d'actionnement pouvant consister en une électrovanne située entre une pompe à vide et un piston lié à la tige : en ouvrant l'électrovanne, la dépression de commande s'accroît, le piston est aspiré et la tige déplacée.

La régulation continue de la pression de l'air au collecteur implique de disposer d'une pression de consigne en fonction du régime et de ramener sans cesse la pression mesurée au collecteur à la pression de consigne. Différents moyens de calcul et d'asservissement ont été prévus pour assurer ces fonctions.

On observe toutefois que des différences inévitables entre les véhicules, en fonction de dispersions de caractéristiques de leurs éléments matériels consécutives à la fabrication, l'assemblage et l'usure conduisent à des réglages différents du turbocompresseur pour un même état de fonctionnement des moteurs. Une mention spéciale doit être faite des filtres à particules disposés sur les conduits échappement en aval des turbines, qui produisent une perte de charge importante s'ils sont encrassés ; elle doit être compensée par une surpression de même valeur à l'entrée de la turbine pour rétablir la détente souhaitée ; le conducteur ne s'en aperçoit pas en régime stationnaire, où un même état de fonctionnement est assuré avec des réglages différents des ailettes, mais la différence des comportements devient particulièrement sensible aux fortes accélérations, où de grandes différences de pression au collecteur peuvent être mesurées au même instant pour les deux véhicules même s'ils ont été conduits de la même manière. Un même régime de vitesse de moteur peut être atteint avec un écart de 0,3 seconde par exemple, ce qui est bien perceptible et désagréable, et cet écart peut durer jusqu'à la fin de l'accélération.

L'objet de l'invention présente est donc de remédier à ces écarts de réponse à une même commande. On y parvient au moyen d'un dispositif de réglage d'un turbocompresseur d'un moteur suralimenté, comprenant un détecteur d'une pression d'air mesurée parvenant au moteur, des moyens de calcul d'un signal de réglage d'un organe de réglage du turbocompresseur, les moyens de calcul comprenant un moyen de calcul d'une pression de consigne à fournir au moteur, un premier module de calcul d'une première intégrale d'une différence entre la pression de consigne et la pression mesurée, caractérisé en ce qu'il comprend un second module de calcul d'une intégrale de la première intégrale, et des moyens de décision pour permettre ou interrompre des périodes d'utilisation du second module ; ainsi qu'au moyen d'un procédé de réglage d'un turbocompresseur d'un moteur suralimenté, consistant à mesurer une pression d'air parvenant au moteur, à calculer une pression de consigne à fournir au moteur, une différence entre la pression de consigne et la pression mesurée, à traiter numériquement ladite différence, et à calculer finalement un signal permettant de régler le turbocompresseur en fonction notamment de ladite différence traitée, caractérisé en ce qu'il consiste à calculer à tout instant une intégrale de ladite différence sur une durée précédente déterminée, à condition que le turbocompresseur reste à un état stable de réglage, et à modifier le signal permettant de régler le turbocompresseur en fonction de ladite intégrale, à condition que le moteur soit dans un état d'accélération.

Certains aspect secondaires de l'invention contribuent à améliorer la conception de base résumée ci-dessus.

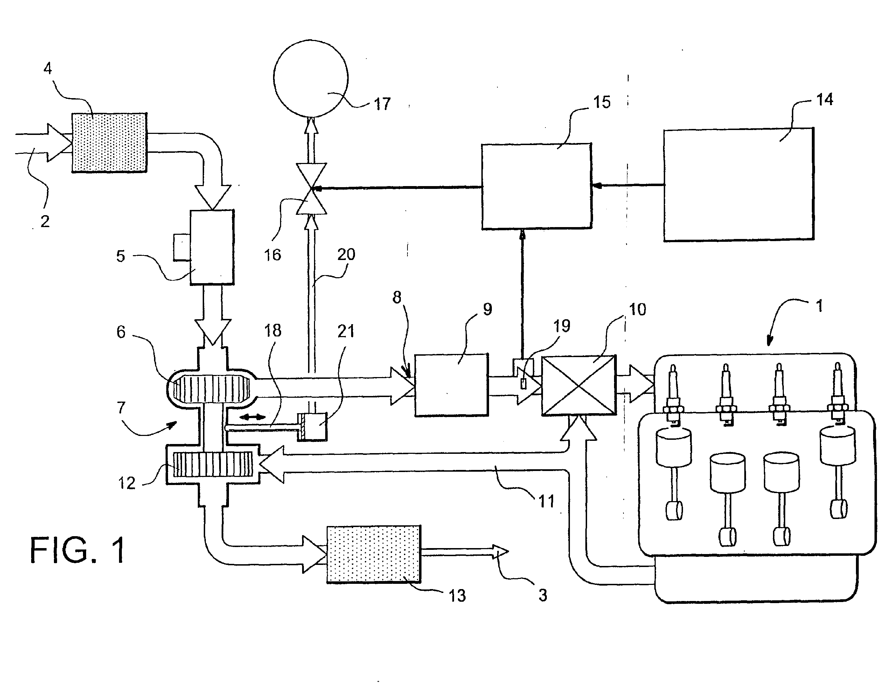

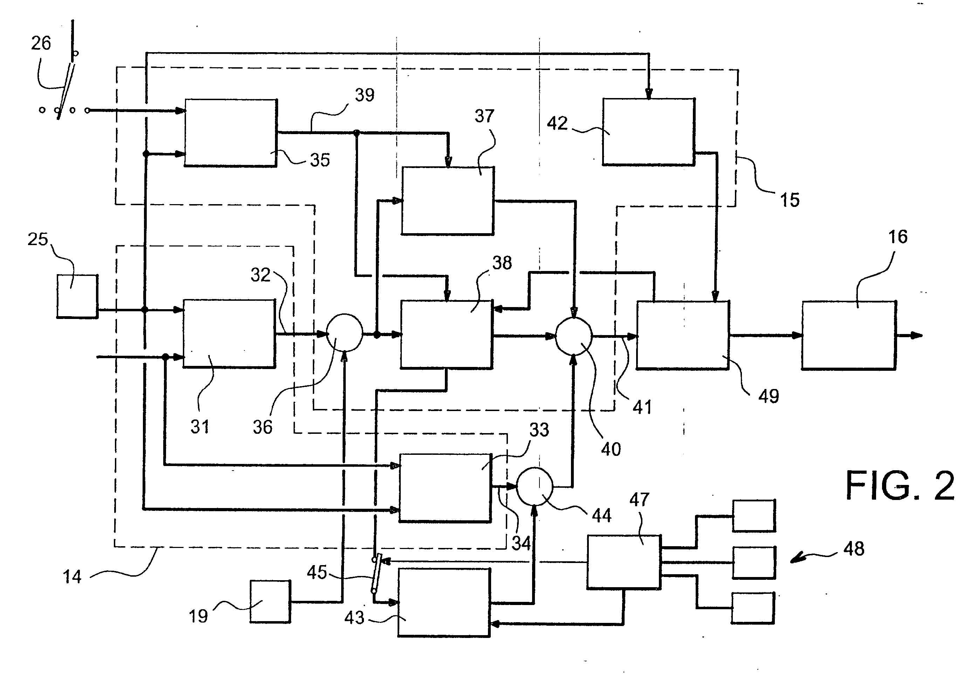

Une réalisation préférée de l'invention sera maintenant décrite en liaison aux figures, dont la figure 1 est une vue générale du dispositif de régulation, et la figure 2 décrit plus en détail le module utilisé pour calculer le signal de commande.

Un moteur à explosion 1 est alimenté en air frais par une entrée 2 et rejette les gaz brûlés par un échappement 3. L'air frais passe par un filtre 4 et un débitmètre 5 avant d'entrer dans un compresseur 6 d'un turbocompresseur 7 à régler. Il entre dans un collecteur 8 après avoir été comprimé, passe par un refroidisseur 9 d'air suralimenté et par une vanne 10 de recirculation des gaz d'échappement. Les gaz d'échappement s'écoulent par un collecteur 11 de gaz d'échappement avant de traverser une turbine 12 du turbocompresseur 7 et un filtre à particules 13, et de parvenir à l'échappement 3. On désigne par 14 une unité de calcul responsable en particulier du calcul d'une pression de consigne, par 15 un régulateur de pression, par 16 une électrovanne, par 17 une pompe à vide et par 18 une tige de régulation du turbocompresseur 7. Un capteur 19 de pression est placé sur le collecteur 8 d'air et fournit une pression mesurée à cet endroit au régulateur 15, qui reçoit encore une pression de consigne de l'unité de calcul 14. Le régulateur 15 fournit un signal de commande à l'électrovanne 16, qui ouvre ou ferme une conduite 20 d'aspiration entre une chambre 21 derrière la tige 18 et la pompe à vide 17 ; l'électrovanne est à ouverture progressive et peut donc faire varier à volonté la pression dans la chambre 21 et donc l'enfoncement de la tige 18. Tous ces éléments mécaniques étant connus de l'homme du métier, ils ne seront pas décrits davantage. On passe plutôt au commentaire de la figure 2.

L'unité de calcul 14 reçoit des signaux d'entrée de débit de carburant et d'un tachymètre 25 et représentatifs du débit de carburant injecté et du régime du moteur ; elle dispose d'une carte 31, c'est-à-dire d'une table à deux valeurs d'entrée où une fonction tridimensionnelle programmée auparavant et invariable donne une première valeur de pression de consigne en fonction des deux valeurs d'entrée introduites à une sortie 32. Les signaux de débit de carburant et de régime du moteur sont aussi fournis à une carte dite de pré- positionnement 33 qui délivre une valeur de pré-régulation de l'électrovanne 16 (pouvant être exprimée en pourcentage de pleine ouverture des ailettes) à une sortie 34. Cette valeur de pré-régulation de l'électrovanne 16 a pour utilité principale de maintenir l'électrovanne 16 non loin de la valeur de régulation finale qui lui sera appliquée et donc de stabiliser l'asservissement ; elle est insensible à la différence entre la pression de consigne et la pression au collecteur. La première valeur de pression de consigne est modifiée de la façon qu'on va décrire pour tenir compte d'autres paramètres et du fonctionnement du moteur aux instants immédiatement antérieurs.

Le régulateur 15 reçoit les valeurs mesurées par le tachymètre 25 et par un capteur associé au levier de vitesse ou par un calcul de rapport de vitesse 26 et qui indique quelle vitesse est engagée à cet instant. Ces deux valeurs parviennent à une carte 35 qui établit des cartographies utilisées dans un asservissement PID (proportionnel, intégral, différentiel). Un soustracteur 36 reçoit les valeurs de la pression de consigne à la sortie 32 de la carte 31 et de la pression mesurée par le capteur 19, les soustrait l'une de l'autre et les fournit à des modules de calcul 37 et 38 qui reçoivent aussi un résultat fourni par la sortie 39 de la carte 35 ; en fonction de ce résultat, les modules 37 et 38 calculent des termes proportionnels, intégraux et dérivés de la différence des pressions issue du soustracteur 36. Dans l'exemple présent, le module 37 calcule un terme de dérivée du premier ordre et le module 38 calcule une première intégrale sur une durée de quelques millièmes de secondes. Le régulateur 15 comprend encore un additionneur 40 des sorties des modules 37 et 38 ainsi que de la valeur obtenue par la carte de pré-positionnement 33, qui fournit le signal de commande par sa sortie 41 à l'électrovanne 16. On doit mentionner aussi qu'un module limiteur 42 du signal, intégré indépendamment au régulateur 15, est conçu pour interdire l'ouverture ou la fermeture de l'électrovanne 16 au-delà de sa plage de fonctionnement linéaire en fonction des indications fournies par le tachymètre 25. Le signal à l'électrovanne 16 est alors issu d'un module de confection de signal 49 en fonction de la sortie de l'additionneur 40 et du module limiteur 42.

Il est conforme à l'invention que le module de calcul 38 d'intégrale soit complété par un second module de calcul d'intégrale 43 qui donne l'intégrale de la différence des pressions sur une durée beaucoup plus importante, de préférence au moins dix fois plus importante que ne le fait le module de calcul 38 précédent. La valeur obtenue à la sortie de ce second module de calcul de terùe d'intégrale 43 est ajoutée à la valeur de pré-positionnement par un additionneur 44 et incorporée ensuite au signal de commande par l'additionneur 40. Elle correspond à une intégrale de la première intégrale de la différence de pression, et le signal issu du premier module de calcul 38 est appliqué, de fait, au second module de calcule 43. Il a été constaté que la dispersion des comportements des moteurs et des véhicules était alors très fortement réduite.

Cet apprentissage des caractéristiques de l'asservissement du turbocompresseur 7 par une intégration plus longue n'est cependant pas à appliquer sans condition.

Les conditions de validité de l'apprentissage peuvent être les suivantes :
- la pression au collecteur doit être régulée en boucle fermée, ce qui exclut par exemple le fonctionnement au ralenti ;
- le régime du moteur ne doit pas être trop bas, pour qu'il existe suffisamment d'énergie à la turbine pour avoir une bonne sensibilité à la régulation ;
l'électrovanne 16 doit se trouver dans sa plage de fonctionnement quasi linéaire, hors de plages extrêmes ;
- le moteur doit se trouver en mode d'injection normale de carburant, ce qui exclut entre autres le mode de nettoyage du filtre à particules 13 où l'injection de carburant est faite différemment ;
- la pression au collecteur ne doit pas être plus faible qu'un seuil, pour diminuer l'erreur faite sur l'apprentissage ;
- la pression de l'air ambiant ne doit pas être plus faible qu'un seuil, les corrections dues à l'altitude n'étant pas prises en compte dans ce mode de réalisation ;
- la tension à la batterie doit être dans une plage normale au-dessus d'un seuil, afin de ne pas intégrer des différences due à un dysfonctionnement du circuit électrique ;
- le turbocompresseur doit fonctionner en régime stabilisé ;
- et l'accélérateur doit être enfoncé.

Ces conditions sont en réalité de deux ordres : la plupart de celles qui ont été énumérées ici permettent de garantir que le résultat sortant du second module de calcul d'intégrale 43 reflète bien les caractéristiques du véhicule influençant la dispersion, en imposant qu'on se trouve dans des conditions ordinaires et stables du réglage et du fonctionnement du moteur, sans qu'interviennent des paramètres exceptionnels ou des contributions transitoires.

La dernière condition définit un état transitoire du moteur qui n'autorise pas le calcul de la seconde intégrale par le second module 43. Il faut comprendre que la seconde intégrale est sans cesse appliquée à l'asservissement de l'électrovanne 16 et du turbocompresseur 7 et recalculée quand les circonstances le permettent en rendant l'interrupeur 45 passant. Le second module 43 est donc associé à un moyen de décision 47 relié à des capteurs de diverses grandeurs physiques 48 du véhicule pour vérifier les conditions précédentes, et qui le laissent apprendre ou non la première intégrale venant du module de calcul 38 par la commande de l'interrupteur 45. Les conditions données plus haut ne sont ni indispensables ni limitatives en général.

On s'est consacré à la description d'un turbocompresseur 7 régulé par des ailettes pivotantes, mais l'invention pourrait s'appliquer à tout autre moyen de régulation de turbocompresseur, comme une dérivation des gaz d'échappement.

## Revendications

1. Dispositif de réglage d'un turbocompresseur (7) d'un moteur suralimenté (1), comprenant un détecteur (19) d'une pression d'air mesurée parvenant au moteur, des moyens de calcul (14, 15) d'un signal de réglage d'un organe de réglage (16) du turbocompresseur, les moyens de calcul comprenant un moyen de calcul (14) d'une pression de consigne à fournir au moteur, un premier module (38) de calcul d'une première intégrale d'une différence entre la pression de consigne et la pression mesurée, **caractérisé en ce qu**'il comprend un second module (43) de calcul d'intégrale de la première intégrale, et des moyens de décision (45, 46, 47) pour permettre ou interrompre des périodes d'utilisation du second module.

2. Dispositif de réglage d'un turbocompresseur suivant la revendication 1, **caractérisé en ce que** les moyens de calcul comprennent un moyen de calcul (33) d'un signal de pré-positionnement de l'organe de réglage (16) insensible à la différence entre la pression de consigne et la pression mesurée, et des entrées d'un additionneur (44) sont reliées à des sorties du moyens de calcul (33) du signal de pré-positionnement et du second module (43).

3. Procédé de réglage d'un turbocompressseur (7) d'un moteur suralimenté (1), consistant à mesurer une pression d'air parvenant au moteur, à calculer une pression de consigne à fournir au moteur, une différence entre la pression de consigne et la pression mesurée, à traiter numériquement ladite différence, et à calculer finalement un signal permettant de régler le turbocompresseur en fonction d'une première intégrale de ladite différence traitée, **caractérisé en ce qu**'il consiste à calculer à tout instant une intégrale de ladite première intégrale sur une durée d'intégration antérieure plus longue qu'une durée d'intégration de ladite première intégrale, à condition que le turbocompresseur reste à un état stable de réglage, et à modifier le signal permettant de régler le turbocompresseur en fonction de ladite intégrale, à condition que le moteur soit dans un état d'accélération.

4. Procédé de réglage d'un turbocompresseur suivant la revendication 3, **caractérisé en ce que** l'intégrale est appliquée au signal permettant de régler le turbocompresseur en tant que terme correcteur additionneur.

5. Procédé de réglage d'un turbocompresseur suivant l'une quelconque des revendications 3 et 4, **caractérisé en ce que** ladite durée d'intégration de l'intégrale est au moins dix fois plus longue la durée d'intégration de ladite première intégrale.

6. Procédé de réglage d'un turbocompresseur suivant l'une quelconque des revendications 3 à 5, **caractérisé en ce que** l'intégrale n'est calculée que si la pression mesurée est supérieure à un seuil.

7. Procédé de réglage d'un turbocompresseur suivant l'une quelconque des revendications 3 à 6, **caractérisé en ce que** l'intégrale n'est calculée que si l'air ambiant est à une pression supérieure à un seuil.

8. Procédé de réglage d'un turbocompresseur suivant l'une quelconque des revendications 3 à 7, **caractérisé en ce que** l'intégrale n'est calculée que si une tension de batterie est supérieure à un seuil.

9. Procédé de réglage d'un turbocompresseur suivant l'une quelconque des revendications 3 à 8, **caractérisé en ce que** l'intégrale n'est calculée que si le moteur est à un régime de régulation en boucle fermée, un organe de commande de turbocompresseur est dans une plage de fonctionnement linéaire et du carburant est normalement injecté dans le moteur.

10. Procédé de réglage d'un turbocompresseur suivant l'une quelconque des revendications 3 à 9, **caractérisé en ce que** quand l'intégrale n'est pas calculée, une valeur de l'intégrale calculée auparavant est appliquée pour modifier le signal permettant de régler le turbocompresseur.

## Claims

1. Device for adjusting a turbocharger (7) of a supercharged engine (1), comprising a detector (19) of a measured air pressure arriving at the engine, means (14, 15) of calculating a signal for adjusting an adjustment device (16) of the turbocharger, the calculation means comprising a means (14) of calculating a set-point pressure to be supplied to the engine, a first module (38) for calculating a first integral of a difference between the set-point pressure and the measured pressure, **characterized in that** it comprises a second integral calculation module (43) for the first integral, and decision means (45, 46, 47) for enabling or stopping periods of use of the second module.

2. Device for adjusting a turbocharger according to Claim 1, **characterized in that** the calculation means comprise a means (33) of calculating a signal for prepositioning the adjustment device (16) insensitive to the difference between the set-point pressure and the measured pressure, and inputs of an adder (44) are linked to outputs of the means (33) of calculating the prepositioning signal and of the second module (43).

3. Method of adjusting a turbocharger (7) of a supercharged engine (1), consisting in measuring an air pressure arriving at the engine, in calculating a set-point pressure to be supplied to the engine, a difference between the set-point pressure and the measured pressure, in digitally processing said difference, and in finally calculating a signal for adjusting the turbocharger according to a first integral of said processed difference, **characterized in that** it consists in calculating at any time an integral of said first integral over a prior integration period longer than a period of integration of said first interval, provided that the turbocharger remains in a stable adjustment state, and in modifying the signal for adjusting the turbocharger according to said integral, provided that the engine is in an acceleration state.

4. Method of adjusting a turbocharger according to Claim 3, **characterized in that** the integral is applied to the signal for adjusting the turbocharger as an adder correcting term.

5. Method of adjusting a turbocharger according to either of Claims 3 or 4, **characterized in that** said integral integration period is at least ten times longer than the integration period of said first integral.

6. Method of adjusting a turbocharger according to any one of Claims 3 to 5, **characterized in that** the integral is calculated only if the measured pressure is greater than a threshold.

7. Method of adjusting a turbocharger according to any one of Claims 3 to 6, **characterized in that** the integral is calculated only if the ambient air is at a pressure greater than a threshold.

8. Method of adjusting a turbocharger according to any one of Claims 3 to 7, **characterized in that** the integral is calculated only if a battery voltage is greater than a threshold.

9. Method of adjusting a turbocharger according to any one of Claims 3 to 8, **characterized in that** the integral is calculated only if the engine is in a closed loop mode regulation state, a turbocharger control device is in a linear operating band and fuel is being injected normally into the engine.

10. Method of adjusting a turbocharger according to any one of Claims 3 to 9, **characterized in that** when the integral is not calculated, a value of the integral calculated previously is applied to modify the signal for adjusting the turbocharger.

## Patentansprüche

1. Vorrichtung zur Regelung eines Turboladers (7) eines aufgeladenen Motors (1) mit einem Sensor (19) zur Erfassung eines gemessenen, dem Motor zugeführten Luftdruckes, Berechnungsmitteln (14, 15) zur Berechnung eines Signals für die Regelung eines Regelungsorgans (16) des Turboladers, wobei die Berechnungsmittel ein Berechnungsmittel (14) zur Berechnung eines dem Motor zuzuführenden Solldruckes, ein erstes Berechnungsmodul (38) zur Berechnung eines ersten Integrals einer Differenz zwischen dem Solldruck und dem gemessenen Druck umfassen, **dadurch gekennzeichnet, dass** sie ein zweites Berechnungsmodul (43) zur Integralberechnung des ersten Integrals und Entscheidungsmittel (45, 46, 47) zur Freigabe oder Unterbrechung von Benutzungszeiten des zweiten Moduls umfasst.

2. Vorrichtung zur Regelung eines Turboladers nach Anspruch 1, **dadurch gekennzeichnet, dass** die Berechnungsmittel ein Berechnungsmittel (33) zur Berechnung eines auf die Differenz zwischen Solldruck und gemessenem Druck nicht ansprechenden Signals zur Positionierung des Regelungsorgans (16) umfassen und dass Eingänge eines Addierers (44) mit den Ausgängen des Berechnungsmittels (33) zur Berechnung des Vorpositionierungssignals und des zweiten Moduls (43) verbunden sind.

3. Verfahren zur Regelung eines Turboladers (7) eines aufgeladenen Motors (1), bei dem ein dem Motor zugeführter Luftdruck gemessen, ein dem Motor zuzuführender Solldruck berechnet, eine Differenz zwischen dem Solldruck und dem gemessenen Druck berechnet, die Differenz digital verarbeitet und schließlich ein Signal berechnet werden, mit dem der Turbolader in Abhängigkeit eines ersten Integrals der verarbeiteten Differenz geregelt werden kann, **dadurch gekennzeichnet, dass** es darin besteht, bei unverändertem Regelungszustand des Turboladers jederzeit ein Integral des ersten Integrals über eine vorhergehende Integrationsdauer, die länger ist als eine Integrationsdauer des ersten Integrals zu berechnen und im Beschleunigungszustand des Motors das Signal für die Regelung des Turboladers in Abhängigkeit des Integrals zu ändern.

4. Verfahren zur Regelung eines Turboladers nach Anspruch 3, **dadurch gekennzeichnet, dass** das Integral als additiver Korrekturterm auf das Signal für die Regelung des Turboladers angewendet wird.

5. Verfahren zur Regelung eines Turboladers nach einem der Ansprüche 3 und 4, **dadurch gekennzeichnet, dass** die Integrationsdauer mindestens zehn Mal länger ist als die Integrationsdauer des ersten Integrals.

6. Verfahren zur Regelung eines Turboladers nach einem der Ansprüche 3 bis 5, **dadurch gekennzeichnet, dass** das Integral nur berechnet wird, wenn der gemessene Druck einen Grenzwert übersteigt.

7. Verfahren zur Regelung eines Turboladers nach einem der Ansprüche 3 bis 6, **dadurch gekennzeichnet, dass** das Integral nur berechnet wird, wenn der Druck der Umluft einen Grenzwert übersteigt.

8. Verfahren zur Regelung eines Turboladers nach einem der Ansprüche 3 bis 7, **dadurch gekennzeichnet, dass** das Integral nur berechnet wird, wenn eine Batteriespannung einen Grenzwert übersteigt.

9. Verfahren zur Regelung eines Turboladers nach einem der Ansprüche 3 bis 8, **dadurch gekennzeichnet, dass** das Integral nur berechnet wird, wenn der Motor im geschlossenen Regelkreis läuft, ein Turboladerregelorgan in einem linearen Betriebsbereich liegt und Kraftstoff normal in den Motor eingespritzt wird.

10. Verfahren zur Regelung eines Turboladers nach einem der Ansprüche 3 bis 9, **dadurch gekennzeichnet, dass** wenn das Integral nicht berechnet wird, ein zuvor berechneter Wert des Integrals zur Änderung des Signals für die Regelung des Turboladers angewendet wird
